# EUROPEAN PATENT APPLICATION

(11) **EP 4 507 139 A1**
(43) Date of publication of application: **12.02.2025**
(21) Application number: 24193313.4
(22) Date of filing: 07.08.2024
(51) Int. Cl.: H01R 43/00, H01R 4/72, H02G 15/18

(54) **WIRE HARNESS PRODUCT CLAMPING DEVICE AND HEAT SHRINK MACHINE**

(30) Priority: 10.08.2023 CN 202322153294 U
(71) Applicant: Tyco Electronics (Shanghai) Co., Ltd., Pilot Free Trade Zone Shanghai 200131 (CN)
(72) Inventor: Zhu, Yiqun, Shanghai, 200233 (CN); Wang, Zhen, Shanghai, 200233 (CN)
(74) Representative: Grünecker Patent- und Rechtsanwälte PartG mbB

(57) **Abstract**

The present invention discloses a wire harness product clamping device and a heat shrink machine. The wire harness product clamping device comprises of: a pair of cantilevers (4) installed on a heat shrink machine and capable of being moved between a first position and a second position and rotated between a use state and a storage state; and multiple different wire harness fixtures (6, 51, 52) installed on the cantilevers (4) to respectively clamp various different wire harness products (8). When the pair of cantilevers (4) are in the use state and moved to the first position, the wire harness fixtures (6, 51, 52) are located outside the heat shrink machine to facilitate clamping the wire harness products (8) by the wire harness fixtures (6, 51, 52); when the pair of cantilevers (4) are in the use state and moved from the first position to the second position, the heat shrink tube (83) on the wire harness product (8) clamped by the wire harness fixture (6, 51, 52) is moved from the outside of the heat shrink machine to the inside of the heat shrink machine. In the present invention, the structure of the wire harness product clamping device is simple and compact, capable of clamping different wire harness products, and can be quickly expanded for use and folded up for storage without occupying production space.

## Description

### CROSS-REFERENCE TO RELATED APPLICATION

This application claims the benefit of Chinese Patent Application No. CN202322153294.9 filed on August 10, 2023 in the State Intellectual Property Office of China, the whole disclosure of which is incorporated herein by reference.

### BACKGROUND OF THE INVENTION

### Field of the Invention

The present invention relates to a wire harness product clamping device for a heat shrink machine and a heat shrink machine comprising the wire harness product clamping device.

### Description of the Related Art

In the prior art, a wire harness product includes a wire harness and a heat shrink tubing installed on the wire harness. In order to heat shrink the heat shrink tubing onto the wire harness, it is necessary to use a heat shrink machine to heat the heat shrink tubing installed on the wire harness. However, due to space limitations and limited applicability, the existing wire harness product clamping device built into the heat shrink machine can only hold an ordinary wire harness product and cannot hold other types of wire harness products, such as spliced wire harness products, wire harness products with crimped terminals, or wire harness products with multiple heat shrink tubes. Therefore, if you want to heat shrink other types of wire harness products, you can only rely on external wire harness product clamping devices. However, the existing external wire harness product clamping devices on the market take up a lot of space, making installation and disassembly inconvenient and inconvenient to use.

### SUMMARY OF THE INVENTION

The present invention has been made to overcome or alleviate at least one aspect of the above mentioned disadvantages.

According to an aspect of the present invention, there is provided a wire harness product clamping device. The wire harness product clamping device comprises of: a pair of cantilevers installed on a heat shrink machine and capable of being moved between a first position and a second position and rotated between a use state and a storage state; and multiple different wire harness fixtures installed on the cantilevers to respectively clamp various different wire harness products. When the pair of cantilevers are in the use state and moved to the first position, the wire harness fixtures are located outside the heat shrink machine to facilitate clamping the wire harness products by the wire harness fixtures; when the pair of cantilevers are in the use state and moved from the first position to the second position, the heat shrink tube on the wire harness product clamped by the wire harness fixture is moved from the outside of the heat shrink machine to the inside of the heat shrink machine.

According to an exemplary embodiment of the present invention, the pair of cantilevers are installed on a safety cover of the heat shrink machine; when the pair of cantilevers are in the use state and moved to the first position, the wire harness fixtures are located outside the safety cover; when the pair of cantilevers are in the use state and moved from the first position to the second position, the heat shrink tubing on the wire harness product clamped by the wire harness fixture is moved from the outside of the safety cover to the inside of the safety cover.

According to another exemplary embodiment of the present invention, the wire harness fixtures include a pair of first wire harness fixtures which are respectively installed on the pair of cantilevers for respectively clamping two ends of a first wire harness product.

According to another exemplary embodiment of the present invention, the wire harness fixtures further include: a pair of brackets which are respectively installed on the pair of cantilevers; and a pair of second wire harness fixtures which are respectively installed on the pair of brackets for respectively clamping two ends of a second wire harness product.

According to another exemplary embodiment of the present invention, the two ends of the second wire harness product are different from each other, and the pair of second wire harness fixtures are different from each other and suitable for respectively clamping the two ends of the second wire harness product.

According to another exemplary embodiment of the present invention, the bracket is detachably installed on the cantilever or the second wire harness fixture is detachably installed on the bracket, so that the second wire harness fixture can be quickly replaced.

According to another exemplary embodiment of the present invention, the pair of cantilevers are respectively installed on outer sides of a pair of side walls of the safety cover; when the pair of cantilevers are in the use state and moved to the second position, the pair of first wire harness fixtures are respectively located on the outside of the pair of side walls of the safety cover, and the pair of second wire harness fixtures are located inside the safety cover.

According to another exemplary embodiment of the present invention, the wire harness product clamping device further comprises of: a pair of sliding rails suitable for being respectively fixed to the outer sides of the pair of side walls of the safety cover; and a pair of sliders respectively slidably installed on the pair of sliding rails to be able to move along the pair of sliding rails. One ends of the pair of cantilevers are respectively connected to the pair of sliders to be able to move together with the pair of sliders.

According to another exemplary embodiment of the present invention, the wire harness product clamping device further comprises a bridging member which is connected between the pair of sliders to ensure synchronous movement between the pair of sliders and the pair of cantilevers.

According to another exemplary embodiment of the present invention, the bridging member comprises of: a pair of arms; a crossbeam connected between one ends of the pair of arms; and a pair of mounting seats respectively fixed to the other ends of the pair of arms. The pair of sliders are respectively fixed to the inner sides facing each other of the pair of mounting seats, and one ends of the pair of cantilevers are respectively connected to the outer side of the pair of mounting seats.

According to another exemplary embodiment of the present invention, one ends of the pair of cantilevers are respectively rotatably connected to the pair of mounting seats, allowing the pair of cantilevers to be rotated between the use state and the storage state.

According to another exemplary embodiment of the present invention, a pin hole is formed in one end of the cantilever and the mounting seat, and the wire harness product clamping device further includes a locking pin fitted in the pin hole; when the pair of cantilevers is in the use state or the storage state, the locking pin is inserted into the pin hole to lock the pair of cantilevers in the use state or the storage state.

According to another exemplary embodiment of the present invention, the wire harness product clamping device further comprises a pair of handles which are respectively fixed to the other ends of the pair of cantilevers, so that the pair of cantilevers can be driven by the pair of handles to move between the first position and the second position, as well as to rotate between the use state and the storage state.

According to another exemplary embodiment of the present invention, the sliding rail extends along a first horizontal direction, and the rotation axis of the pair of cantilevers extends along a second horizontal direction perpendicular to the first horizontal direction.

According to another exemplary embodiment of the present invention, a limiting block is provided at the end of the sliding rail and is suitable for pressing against the slider or the mounting seat to limit the pair of cantilevers at the first position or the second position.

According to another exemplary embodiment of the present invention, when the pair of cantilevers is moved to the first position, the bracket on the pair of cantilevers is in a position that does not interfere with the safety cover, so that the pair of cantilevers can be rotated between the use state and the storage state; when the pair of cantilevers is moved to the second position, the bracket on the pair of cantilevers is in a position that interferes with the safety cover, so that the pair of cantilevers cannot be rotated between the use state and the storage state.

According to another exemplary embodiment of the present invention, when the wire harness product clamping device is not needed to use, the pair of cantilevers are rotated from the use state to the storage state and moved from the first position to the second position; when the wire harness product clamping device needs to be used, the pair of cantilevers are moved from the second position to the first position and rotated from the storage state to the use state.

According to another aspect of the present invention, there is provided a heat shrink machine. The heat shrink machine comprises of: a safety cover; a heating device for heating a heat shrink tube that is moved inside the safety cover; and the above wire harness product clamping device, which is installed on the safety cover. The wire harness product clamping device is used to clamp the wire harness product and move the heat shrink tube on the clamped wire harness product to the inside of the safety cover.

According to another exemplary embodiment of the present invention, when the pair of cantilevers are in the use state, the wire harness fixtures are located below the bottom opening of the safety cover; when the pair of cantilevers are in the storage state, the wire harness fixtures are located above the top wall of the safety cover.

In the aforementioned exemplary embodiments of the present invention, the structure of the wire harness product clamping device is simple and compact, capable of clamping different wire harness products, and can be quickly expanded for use and folded up for storage without occupying production space.

### BRIEF DESCRIPTION OF THE DRAWINGS

The above and other features of the present invention will become more apparent by describing in detail exemplary embodiments thereof with reference to the accompanying drawings, in which:
Figure 1 shows an illustrative perspective view of a wire harness product clamping device and a safety cover according to an exemplary embodiment of the present invention, wherein the wire harness product clamping device is in the use state and moved to a first position;
Figure 2 shows an illustrative perspective view of a wire harness product clamping device according to an exemplary embodiment of the present invention, wherein the wire harness product clamping device is in the use state and moved to a first position;
Figure 3 shows an illustrative view of clamping the wire harness product onto the wire harness product clamping device shown in Figure 1;
Figure 4 shows an illustrative view of the wire harness product clamping device moved from the first position shown in Figure 3 to the second position, wherein the heat shrink tubing on the clamped wire harness product is moved to the interior of the safety cover;
Figure 5 shows an illustrative perspective view of a wire harness product clamping device according to an exemplary embodiment of the present invention, wherein the wire harness product clamping device is in the use state and moved to a second position; and
Figure 6 shows an illustrative perspective view of a wire harness product clamping device and a safety cover according to an exemplary embodiment of the present invention, wherein the wire harness product clamping device is in a storage state and is moved to a second position.

### DETAILED DESCRIPTION OF PREFERRED EMBODIMENTS OF THE INVENTION

Exemplary embodiments of the present disclosure will be described hereinafter in detail with reference to the attached drawings, wherein the like reference numerals refer to the like elements. The present disclosure may, however, be embodied in many different forms and should not be construed as being limited to the embodiment set forth herein; rather, these embodiments are provided so that the present disclosure will be thorough and complete, and will fully convey the concept of the disclosure to those skilled in the art.

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

According to a general concept of the present invention, there is provided a wire harness product clamping device. The wire harness product clamping device comprises of: a pair of cantilevers installed on a heat shrink machine and capable of being moved between a first position and a second position and rotated between a use state and a storage state; and multiple different wire harness fixtures installed on the cantilevers to respectively clamp various different wire harness products. When the pair of cantilevers are in the use state and moved to the first position, the wire harness fixtures are located outside the heat shrink machine to facilitate clamping the wire harness products by the wire harness fixtures; when the pair of cantilevers are in the use state and moved from the first position to the second position, the heat shrink tube on the wire harness product clamped by the wire harness fixture is moved from the outside of the heat shrink machine to the inside of the heat shrink machine.

According to another general concept of the present invention, there is provided a heat shrink machine. The heat shrink machine comprises of: a safety cover; a heating device for heating a heat shrink tube that is moved inside the safety cover; and the above wire harness product clamping device, which is installed on the safety cover. The wire harness product clamping device is used to clamp the wire harness product and move the heat shrink tube on the clamped wire harness product to the inside of the safety cover.

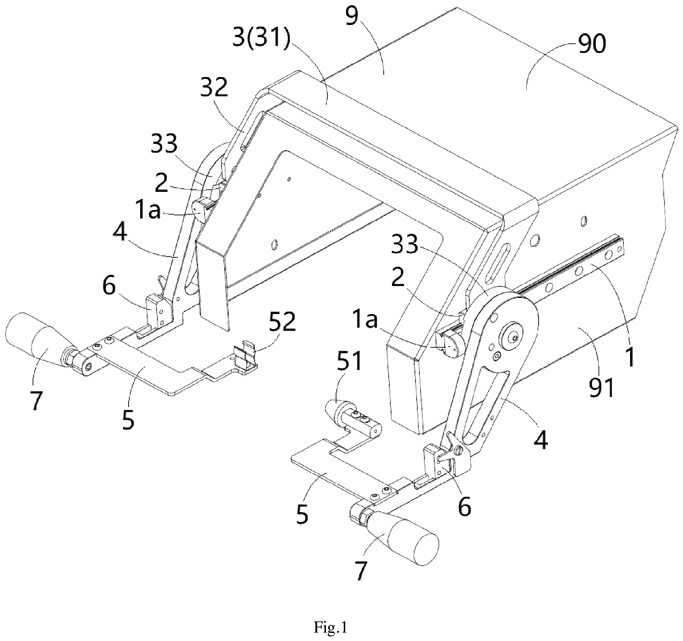

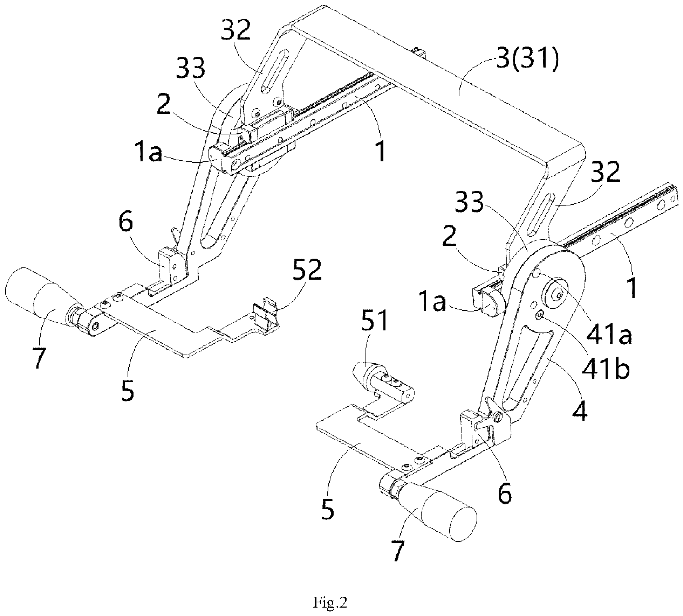

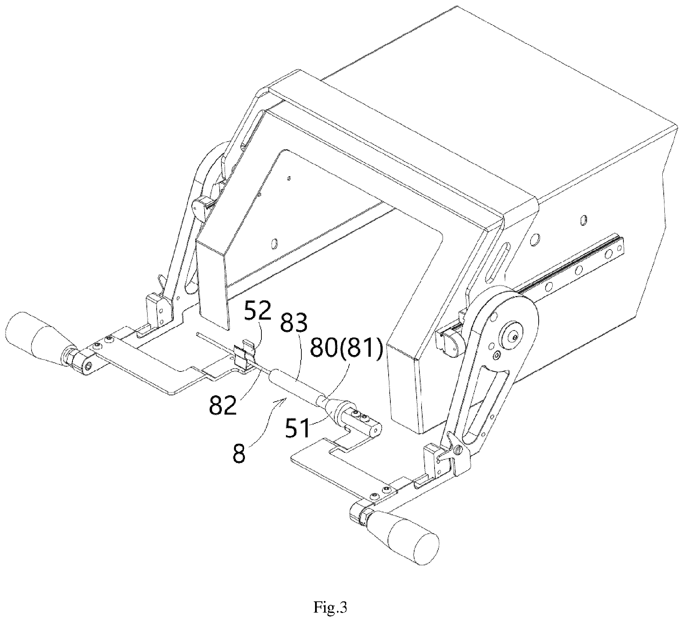

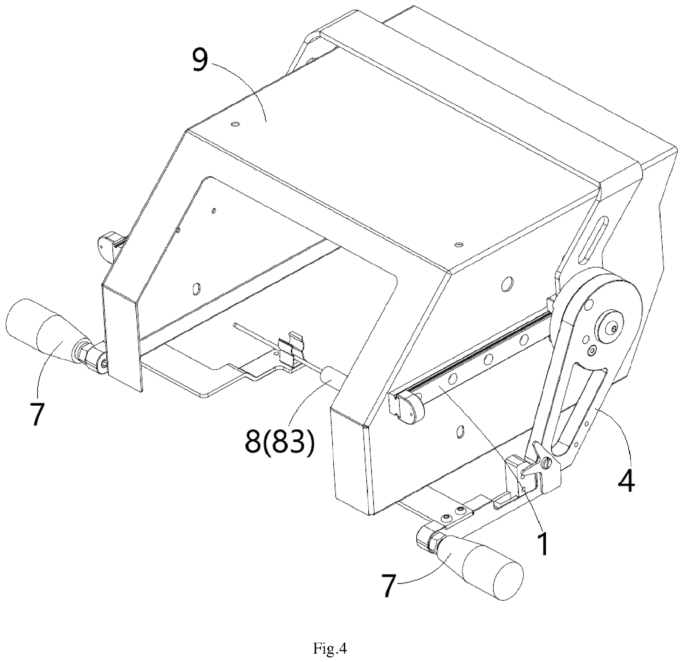

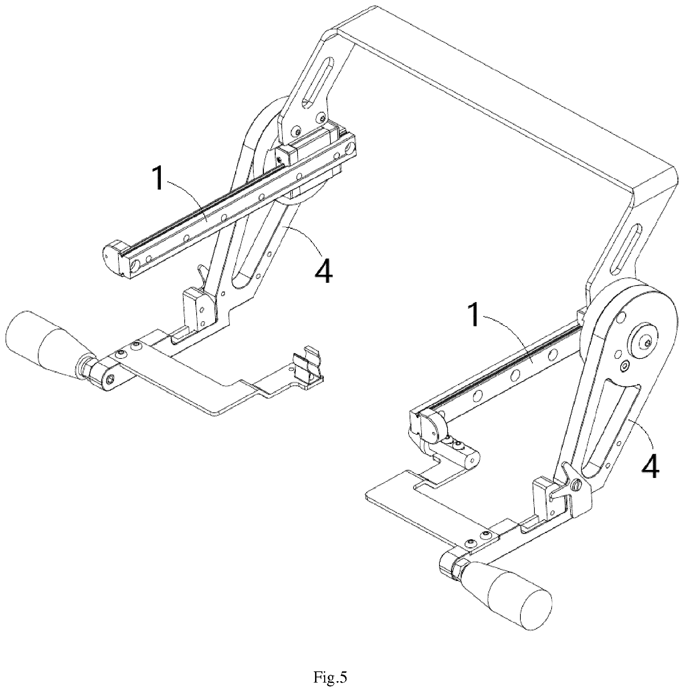

Figure 1 shows an illustrative perspective view of a wire harness product clamping device and a safety cover 9 according to an exemplary embodiment of the present invention, wherein the wire harness product clamping device is in the use state and is moved to a first position; Figure 2 shows an illustrative perspective view of a wire harness product clamping device according to an exemplary embodiment of the present invention, wherein the wire harness product clamping device is in the use state and moved to a first position; Figure 3 shows an illustrative view of clamping wire harness product 8 onto the wire harness product clamping device shown in Figure 1; Figure 4 shows an illustrative view of the wire harness product clamping device moved from the first position shown in Figure 3 to the second position, wherein the heat shrink tube 83 on the clamped wire harness product 8 is moved to the interior of the safety cover 9; Figure 5 shows an illustrative perspective view of a wire harness product clamping device according to an exemplary embodiment of the present invention, wherein the wire harness product clamping device is in the use state and moved to a second position.

As shown in Figures 1 to 5, in an exemplary embodiment of the present invention, a wire harness product clamping device is disclosed. The wire harness product clamping device includes a pair of cantilevers 4 and various different wire harness fixtures 6, 51, and 52. The pair of cantilevers 4 are installed on the safety cover 9 of the heat shrink machine, can be moved between a first position and a second position and can be rotated between a use state and a storage state. Multiple different wire harness fixtures 6, 51, and 52 are installed on the cantilevers 4 to respectively clamp various wire harness products 8. In the illustrated embodiment, the wiring harness product 8 typically includes a wiring harness 80 and a heat shrink tube 83 fitted onto the wiring harness 80. One of two ends 81 and 82 of the wire harness product 8 can be a wire harness extending from the heat shrink tube 83, a terminal pressed onto a single head wire harness, or the end of the heat shrink tube 83 fitted onto a single head wire harness.

As shown in Figures 1 to 5, in the illustrated embodiments, when the pair of cantilevers 4 are in the use state and moved to the first position (as shown in Figures 1-3), the wire harness fixtures 6, 51, and 52 are located outside the safety cover 9 to facilitate clamping the wire harness product 8 onto the wire harness fixtures 6, 51, and 52.

As shown in Figures 1 to 5, in the illustrated embodiments, when the pair of cantilevers 4 are in the use state and moved from the first position to the second position, the heat shrink tube 83 on the wire harness product 8 clamped by wire harness fixtures 6, 51, and 52 is moved from the outside of the safety cover 9 to the inside of the safety cover 9 to heat the heat shrink tube 83.

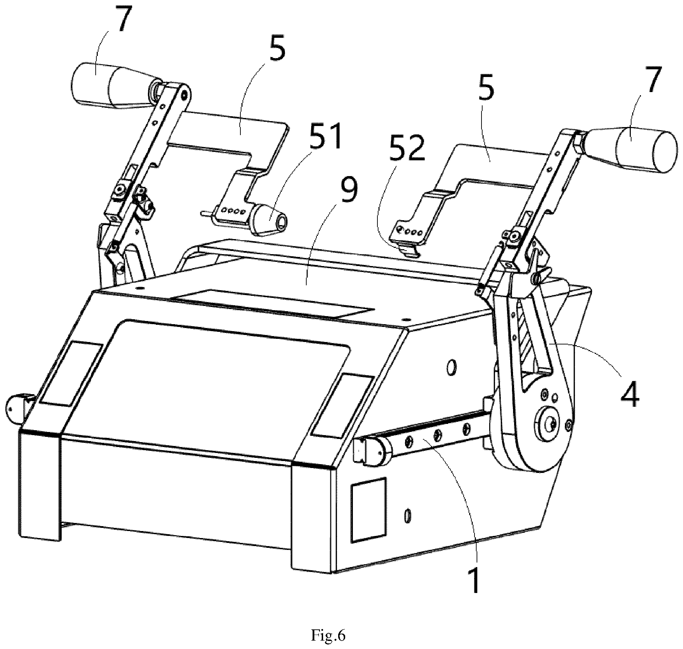

Figure 6 shows an illustrative perspective view of a wire harness product clamping device and a safety cover according to an exemplary embodiment of the present invention, wherein the wire harness product clamping device is in a storage state and is moved to a second position.

As shown in Figure 6, in the illustrated embodiment, when the wire harness product clamping device is not needed to use, the pair of cantilevers 4 are rotated from the use state to the storage state and moved from the first position to the second position. In this way, it won't take up production space, which is very convenient.

As shown in Figures 1 to 6, in the illustrated embodiments, the wire harness fixtures 6, 51, and 52 include a pair of first wire harness fixtures 6, which are respectively installed on the pair of cantilevers 4, suitable for respectively clamping two ends of a first wire harness product (not shown).

As shown in Figures 1 to 6, in the illustrated embodiments, the wire harness fixtures 6, 51, and 52 further include a pair of brackets 5 and a pair of second wire harness fixtures 51 and 52. The pair of brackets 5 are installed onto the pair of cantilevers 4. The pair of second wire harness fixtures 51 and 52 are respectively installed on the pair of brackets 5, suitable for clamping two ends 81 and 82 of a second wire harness product 8.

As shown in Figures 1 to 6, in the illustrated embodiment, the two ends 81 and 82 of the second wiring harness product 8 are different from each other. The pair of second wire harness fixtures 51 and 52 are different from each other and suitable for respectively clamping the two ends 81 and 82 of the second wire harness product 8.

As shown in Figures 1 to 6, in the illustrated embodiments, the bracket 5 is detachably installed on the cantilever 4 or the second wire harness fixtures 51 and 52 are detachably installed on the brackets 5, allowing for quick replacement of the second wire harness fixtures 51 and 52. In this way, different wire harness fixtures can be quickly replaced to clamp different wire harness products.

As shown in Figures 1 to 6, in the illustrated embodiments, the pair of cantilevers 4 are respectively installed on the outer sides of a pair of side walls 91 of the safety cover 9. When the pair of cantilevers 4 are in the use state and moved to the second position, the pair of first wire harness fixtures 6 are respectively located on the outside of the pair of side walls 91 of the safety cover 9, and the pair of second wire harness fixtures 51 and 52 are located inside the safety cover 9.

As shown in Figures 1 to 6, in the illustrated embodiments, the wire harness product clamping device further comprises a pair of sliding rails 1 and a pair of sliders 2. The pair of sliding rails 1 are suitable for being respectively fixed to the outer sides of the pair of side walls 91 of the safety cover 9. The pair of sliders 2 are slidably installed onto the pair of sliding rails 1 to be able to move along the pair of sliding rails 1. One ends of the pair of cantilevers 4 are respectively connected to the pair of sliders 2 to be able to move together with the pair of sliders 2.

As shown in Figures 1 to 6, in the illustrated embodiments, the wire harness product clamping device further includes a bridging member 3, which is bridged between the pair of sliders 2 to ensure synchronous movement of the pair of sliders 2 and the pair of cantilever arms 4.

As shown in Figures 1 to 6, in the illustrated embodiments, the bridging member 3 comprises a pair of arms 32, a crossbeam 31, and a pair of mounting seats 33. The crossbeam 31 is connected between one ends of the pair of arms 32. The pair of mounting seats 33 are respectively fixed to the other ends of the pair of arms 32. The pair of sliders 2 are respectively fixed to the inner sides facing each other of the pair of mounting seats 33, and one ends of the pair of cantilevers 4 are respectively connected to the outer sides of the pair of mounting seats 33.

As shown in Figures 1 to 6, in the illustrated embodiments, one ends of the pair of cantilevers 4 are rotatably connected to the pair of mounting seats 33, allowing the pair of cantilevers 4 to be rotated between the use state and the storage state.

As shown in Figures 1 to 6, in the illustrated embodiments, a pin hole 41a is formed in one end of the cantilever 4 and the mounting seat 33, and the wire harness product clamping device further includes a locking pin 41b suitable for matching with the pin hole 41a. When the pair of cantilevers 4 is in the use state or storage state, the locking pin 41b is inserted into the pin hole 41a to lock the pair of cantilevers 4 at the use state or the storage state. When it is necessary to rotate the pair of cantilevers 4, the locking pin 41b needs to be pulled out of the pin hole 41a.

As shown in Figures 1 to 6, in the illustrated embodiments, the wire harness product clamping device further includes a pair of handles 7, which are respectively fixed to the other ends of the pair of cantilevers 4, so that the pair of handles 7 can drive the pair of cantilevers 4 to move between the first and second positions and rotate between the use and storage states.

As shown in Figures 1 to 6, in the illustrated embodiments, the sliding rail 1 extends along a first horizontal direction, and the rotation axes of the pair of cantilevers 4 extend along a second horizontal direction perpendicular to the first horizontal direction.

As shown in Figures 1 to 6, in the illustrated embodiments, a limiting block 1a is provided at the end of sliding rail 1, which is suitable for pressing against slider 2 or mounting seat 33 to limit the pair of cantilevers 4 at the first or second position.

As shown in Figures 1 to 6, in the illustrated embodiments, when the pair of cantilevers 4 is moved to the first position, the brackets 5 on the pair of cantilevers 4 are in a position that does not interfere with the safety cover 9 to allow the pair of cantilevers 4 to rotate between the use state and the storage state. When the pair of cantilevers 4 is moved to the second position, the brackets 5 on the pair of cantilevers 4 are in a position that interferes with the safety cover 9, preventing the pair of cantilevers 4 from being rotated between the use and storage states. Therefore, in the present invention, when it is necessary to rotate the pair of cantilevers 4, the pair of cantilevers 4 must first be moved to the first position.

As shown in Figures 1 to 6, in the illustrated embodiments, when the wire harness product clamping device is not required to use, the pair of cantilevers 4 are rotated from the use state to the storage state and moved from the first position to the second position. When the wire harness product clamping device is needed to use, the pair of cantilevers 4 are moved from the second position to the first position and rotated from the storage state to the use state.

As shown in Figures 1 to 6, in another exemplary embodiment of the present invention, a heat shrink machine is also disclosed. The heat shrink machine includes: a safety cover 9, a heating device (not shown), and the aforementioned wire harness product clamping device. The wire harness product clamping device is used to clamp the wire harness product 8 and move the heat shrink tube 83 on the clamped wire harness product 8 to the inside of the safety cover 9. The heating device is used to heat the heat shrink tube 83 that has been moved inside the safety cover 9.

As shown in Figures 1 to 6, in the illustrated embodiments, when the pair of cantilevers 4 are in the use state, wire harness fixtures 6, 51, and 52 are located below the bottom opening of the safety cover 9 to allow the heat shrink tubing 83 to enter the bottom opening of the safety cover 9. When the pair of cantilevers 4 are in the storage state, the wire harness fixtures 6, 51, and 52 are located above the top wall 90 of the safety cover 9, so as not to occupy production space.

As shown in Figures 1 to 6, the integral external wire harness product clamping device of the present invention does not require additional space occupation, and can be quickly expanded for use and folded up for storage without disassembly, making it very convenient to use.

It should be appreciated for those skilled in this art that the above embodiments are intended to be illustrated, and not restrictive. For example, many modifications may be made to the above embodiments by those skilled in this art, and various features described in different embodiments may be freely combined with each other without conflicting in configuration or principle.

Although several exemplary embodiments have been shown and described, it would be appreciated by those skilled in the art that various changes or modifications may be made in these embodiments without departing from the principles and spirit of the disclosure, the scope of which is defined in the claims and their equivalents.

As used herein, an element recited in the singular and proceeded with the word "a" or "an" should be understood as not excluding plural of said elements or steps, unless such exclusion is explicitly stated. Furthermore, references to "one embodiment" of the present invention are not intended to be interpreted as excluding the existence of additional embodiments that also incorporate the recited features. Moreover, unless explicitly stated to the contrary, embodiments "comprising" or "having" an element or a plurality of elements having a particular property may include additional such elements not having that property.

## Claims

1. A wire harness product clamping device, comprising:
a pair of cantilevers (4) installed on a heat shrink machine and capable of being moved between a first position and a second position and rotated between a use state and a storage state; and
multiple different wire harness fixtures (6, 51, 52) installed on the cantilevers (4) to respectively clamp various different wire harness products (8),
wherein when the pair of cantilevers (4) are in the use state and moved to the first position, the wire harness fixtures (6, 51, 52) are located outside the heat shrink machine to facilitate clamping the wire harness products (8) by the wire harness fixtures (6, 51, 52);
wherein when the pair of cantilevers (4) are in the use state and moved from the first position to the second position, the heat shrink tube (83) on the wire harness product (8) clamped by the wire harness fixture (6, 51, 52) is moved from the outside of the heat shrink machine to the inside of the heat shrink machine.

2. The wire harness product clamping device according to claim 1,
wherein the pair of cantilevers (4) are installed on a safety cover (9) of the heat shrink machine;
wherein when the pair of cantilevers (4) are in the use state and moved to the first position, the wire harness fixtures (6, 51, 52) are located outside the safety cover (9);
wherein when the pair of cantilevers (4) are in the use state and moved from the first position to the second position, the heat shrink tubing (83) on the wire harness product (8) clamped by the wire harness fixture (6, 51, 52) is moved from the outside of the safety cover (9) to the inside of the safety cover (9).

3. The wire harness product clamping device according to claim 1 or 2,
wherein the wire harness fixtures (6, 51, 52) include:
a pair of first wire harness fixtures (6) which are respectively installed on the pair of cantilevers (4) for respectively clamping two ends of a first wire harness product.

4. The wire harness product clamping device according to claim 3,
wherein the wire harness fixtures (6, 51, 52) further include:
a pair of brackets (5) which are respectively installed on the pair of cantilevers (4); and
a pair of second wire harness fixtures (51, 52) which are respectively installed on the pair of brackets (5) for respectively clamping two ends (81, 82) of a second wire harness product (8).

5. The wire harness product clamping device according to claim 4,
wherein the two ends (81, 82) of the second wire harness product (8) are different from each other, and the pair of second wire harness fixtures (51, 52) are different from each other and suitable for respectively clamping the two ends (81, 82) of the second wire harness product (8).

6. The wire harness product clamping device according to claim 4 or 5,
wherein the bracket (5) is detachably installed on the cantilever (4) or the second wire harness fixture (51, 52) is detachably installed on the bracket (5), so that the second wire harness fixture (51, 52) can be quickly replaced.

7. The wire harness product clamping device according to claim 4, 5, or 6,
wherein the pair of cantilevers (4) are respectively installed on outer sides of a pair of side walls (91) of the safety cover (9);
wherein when the pair of cantilevers (4) are in the use state and moved to the second position, the pair of first wire harness fixtures (6) are respectively located on the outside of the pair of side walls (91) of the safety cover (9), and the pair of second wire harness fixtures (51, 52) are located inside the safety cover (9).

8. The wire harness product clamping device according to claim 7, further comprising:
a pair of sliding rails (1) suitable for being respectively fixed to the outer sides of the pair of side walls (91) of the safety cover (9); and
a pair of sliders (2) respectively slidably installed on the pair of sliding rails (1) to be able to move along the pair of sliding rails (1),
wherein one ends of the pair of cantilevers (4) are respectively connected to the pair of sliders (2) to be able to move together with the pair of sliders (2).

9. The wire harness product clamping device according to claim 8, further comprising:
a bridging member (3) which is connected between the pair of sliders (2) to ensure synchronous movement between the pair of sliders (2) and the pair of cantilevers (4),
wherein the bridging member (3) comprises of:
a pair of arms (32);
a crossbeam (31) connected between one ends of the pair of arms (32); and
a pair of mounting seats (33) respectively fixed to the other ends of the pair of arms (32),
wherein the pair of sliders (2) are respectively fixed to the inner sides facing each other of the pair of mounting seats (33), and one ends of the pair of cantilevers (4) are respectively connected to the outer side of the pair of mounting seats (33); wherein optionally
one ends of the pair of cantilevers (4) are respectively rotatably connected to the pair of mounting seats (33), allowing the pair of cantilevers (4) to be rotated between the use state and the storage state,
wherein a pin hole (41a) is formed in one end of the cantilever (4) and the mounting seat (33), and the wire harness product clamping device further includes a locking pin (41b) fitted in the pin hole (41a);
wherein when the pair of cantilevers (4) is in the use state or the storage state, the locking pin (41b) is inserted into the pin hole (41a) to lock the pair of cantilevers (4) in the use state or the storage state.

10. The wire harness product clamping device according to claim 9, further comprising:
a pair of handles (7) which are respectively fixed to the other ends of the pair of cantilevers (4), so that the pair of cantilevers (4) can be driven by the pair of handles (7) to move between the first position and the second position, as well as to rotate between the use state and the storage state.

11. The wire harness product clamping device according to claim 8, 9, or 10,
wherein the sliding rail (1) extends along a first horizontal direction, and the rotation axis of the pair of cantilevers (4) extends along a second horizontal direction perpendicular to the first horizontal direction.

12. The wire harness product clamping device according to claim 9, 10, or 11,
wherein a limiting block (1a) is provided at the end of the sliding rail (1) and is suitable for pressing against the slider (2) or the mounting seat (33) to limit the pair of cantilevers (4) at the first position or the second position.

13. The wire harness product clamping device according to any one of claims 4-12,
wherein when the pair of cantilevers (4) is moved to the first position, the bracket (5) on the pair of cantilevers (4) is in a position that does not interfere with the safety cover (9), so that the pair of cantilevers (4) can be rotated between the use state and the storage state;
wherein when the pair of cantilevers (4) is moved to the second position, the bracket (5) on the pair of cantilevers (4) is in a position that interferes with the safety cover (9), so that the pair of cantilevers (4) cannot be rotated between the use state and the storage state.

14. The wire harness product clamping device according to any one of claims 1-13,
wherein when the wire harness product clamping device is not needed to use, the pair of cantilevers (4) are rotated from the use state to the storage state and moved from the first position to the second position;
wherein when the wire harness product clamping device needs to be used, the pair of cantilevers (4) are moved from the second position to the first position and rotated from the storage state to the use state.

15. A heat shrink machine, comprising:
a safety cover (9);
a heating device for heating a heat shrink tube (83) that is moved inside the safety cover (9); and
the wire harness product clamping device according to any one of claims 1-14, which is installed on the safety cover (9),
wherein the wire harness product clamping device is used to clamp the wire harness product (8) and move the heat shrink tube (83) on the clamped wire harness product (8) to the inside of the safety cover (9),
wherein when the pair of cantilevers (4) are in the use state, the wire harness fixtures (6, 51, 52) are located below the bottom opening of the safety cover (9);
wherein when the pair of cantilevers (4) are in the storage state, the wire harness fixtures (6, 51, 52) are located above the top wall (90) of the safety cover (9).
